# EUROPÄISCHE PATENTANMELDUNG

(11) **EP 3 178 703 A1**
(43) Veröffentlichungstag der Anmeldung: **14.06.2017**
(21) Anmeldenummer: 16466015.1
(22) Anmeldetag: 06.12.2016
(51) Int. Cl.: B60R 13/02, B60R 21/213, B60R 21/216

(54) **VORRICHTUNG ZUM FESTHALTEN EINES BAUTEILS**

(30) Priorität: 10.12.2015 CZ 20150881
(71) Anmelder: Skoda Auto a.s., 29301 Mladá Boleslav (CZ)
(72) Erfinder: Jaroslav, Malý, CZ-51601 Rychnov nad Kneznou (CZ)

(57) **Zusammenfassung**

Vorrichtung zum Festhalten eines Bauteils gebildet durch eine an einer Fahrzeugkarosserie (3) befestigte Abdeckung (1), einen Dachhimmel (4) mit Öffnung (5) für die Einsetzung der Abdeckung (1) und eines Sicherheitshaltemittels (8), die Abdeckung (1) aus einem fixen Teil (6) und einem lösbaren Teil (7) besteht, wobei das Sicherheitshaltemittel (8) an einem Ende mit dem fixen Teil (6) und an dem anderen Ende mit dem lösbaren Teil (7) verbunden ist, womit die freie Bewegung des lösbaren Teils (7) der Abdeckung (1) in den Fahrgastraum hin nach der Aktivierung des Airbags (16) verhindert wird.

## Beschreibung

### Technisches Gebiet

Die Erfindung betrifft eine Vorrichtung zum Festhalten eines Bauteils, insbesondere der in einer Innenverkleidung des Fahrzeuges angeordneten Abdeckung, die gegen das Lösen bei der Aktivierung eines Kopfairbags gesichert ist.

### Bisheriger Stand der Technik

Die Airbags gehören derzeit zur Standardausstattung aller modernen Fahrzeuge, die zur Steigerung der passiven Sicherheit dienen. Es handelt sich in der Regel um Airbags, die beim Frontal- oder Seitenaufprall aktiviert werden. Die Airbags für den Seitenaufprallschutz umfassen Seiten- oder Kopfairbags. Diese sind oberhalb der Türen an beiden Seiten des Fahrzeuginnenraumes angeordnet und mit Innenverkleidung abgedeckt. Bei der Aktivierung des Airbags lösen sich die einzelnen Verkleidungselemente, damit ein ordentliches "Aufblasen der Airbags" sichergestellt wird. Dabei muss sichergestellt werden, dass die losgelösten Komponenten nicht in den Fahrgastraum gelangen. Dies ist mit Hilfe verschiedener Haltemittel sichergestellt. Aus der Patentschrift EP 0873916 B1 ist die Lösung bekannt, wo das Verkleidungselement mittels eines Bands mit dem Befestigungsclip verbunden ist, der zur Karosserieelement, in diesem Fall zur Türsäule, befestigt ist.

Die Innenverkleidung umfasst auch verschiedene Abdeckungen, die für den Fall der Aktivierung der Airbags festgehalten werden müssen. Es handelt sich um die Abdeckung der Innenraumbeleuchtung, die Abdeckung der Kleiderhaken oder die Abdeckung für den Einbau einer Netztrennwand, die den Gepäckraum vom Fahrgastraum sicher abtrennt. Bei der bekannten Ausführung der Abdeckung für den Einbau der Netztrennwand wird zu deren Sicherung ein Sicherheitshaltemittel in Form eines Kunststoffbandes verwendet, das zum Nebenteil, dem Dachhimmel, befestigt ist. Nachteilig ist, dass das Sicherheitshaltemittel eine Vormontage beim Lieferanten erfordert, und zwar das Ankleben an den Dachhimmel Sollte das bereits angeklebte Sicherheitshaltemittel beschädigt werden, z.B. während des Transports vom Lieferanten, ist der Austausch recht kompliziert.

### Darstellung der Erfindung

Die Aufgabe wird durch eine Vorrichtung zum Festhalten eines Bauteils gelöst, die durch eine an einer Fahrzeugkarosserie befestigte Abdeckung, einen Dachhimmel mit Öffnung für die Einsetzung der Abdeckung und eines Sicherheitshaltemittels gebildet wird. Die Darstellung der Erfindung liegt darin, dass die Abdeckung aus einem fixen Teil und einem lösbaren Teil besteht, wobei das Sicherheitshaltemittel an einem Ende mit einem fixen Teil und an dem anderen Ende mit einem lösbaren Teil verbunden ist. Die Darstellung der Erfindung liegt ferner darin, dass der lösbare Teil durch einen Grundkörper gebildet wird, an dem sich eine zylindrisch-konische Wand befindet, die einen zylindrischen Abschnitt mit halbzylindrischer Einfassung aufweist, und dass der fixe Teil durch ein zylindrisches Element gebildet wird, das an der halbzylindrischen Einfassung angeordnet ist, wobei der Übergang zwischen der halbzylindrischen Einfassung und dem fixen Teil eine Bruchlinie bildet, entlang der die Trennung des fixen Teiles von dem lösbaren Teil nach der Aktivierung des Airbags erfolgt. Damit die Bruchlinie gebildet wird, ist der Außendurchmesser des zylindrischen Abschnitts größer als der Innendurchmesser der halbzylindrischen Einfassung.

Diese konstruktive Gestaltung verhindert freie Bewegung des lösbaren Teils der Abdeckung in den Fahrgastraum hin. Weiterer Vorteil liegt darin, dass keine Vormontage der Abdeckung beim Lieferanten des Dachhimmels benötigt wird und bei eventueller Beschädigung der Abdeckung, z.B. beim Transport, der Austausch ohne Auswirkungen auf die anliegenden Teile einfach erfolgen kann.

### Übersicht der Figuren der Zeichnungen

Die Erfindung wird anhand der Ausführungsbeispiele gemäß den beigefügten Zeichnungen näher erläutert, in denen zeigen die Fig. 1 eine perspektivische Ansicht der Abdeckung, die Fig. 2 die Vorrichtung zum Festhalten des Bauteils in einer Schnittdarstellung, die Fig. 3 eine perspektivische Ansicht der eingebauten Abdeckung in alternativer Ausführung, die Fig. 4 die alternative Ausführung in einer Schnittdarstellung und die Fig. 5 eine perspektivische Ansicht der nicht eingebauten Abdeckung in alternativer Ausführung.

### Ausführungsbeispiel der Erfindung

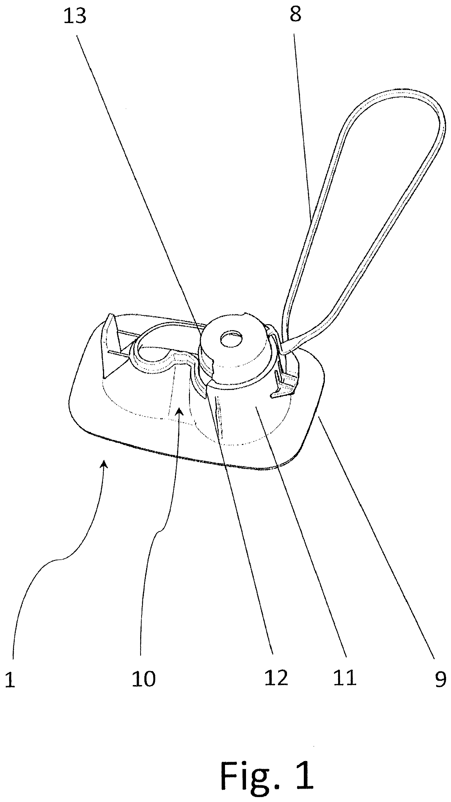

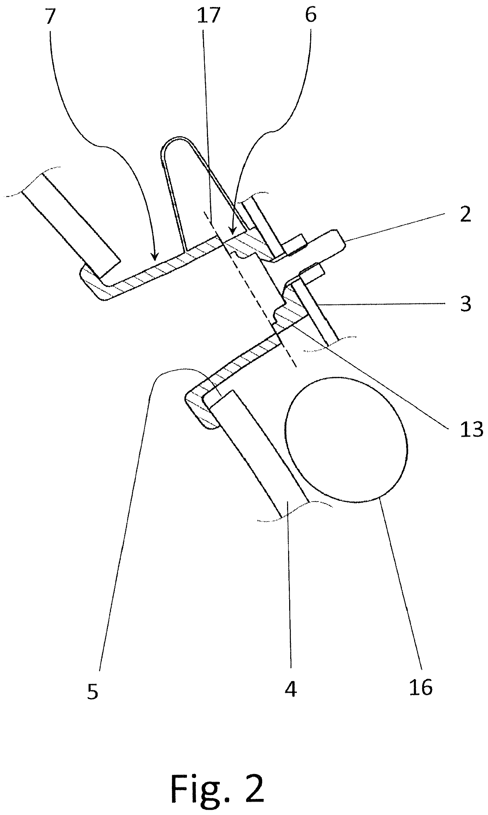

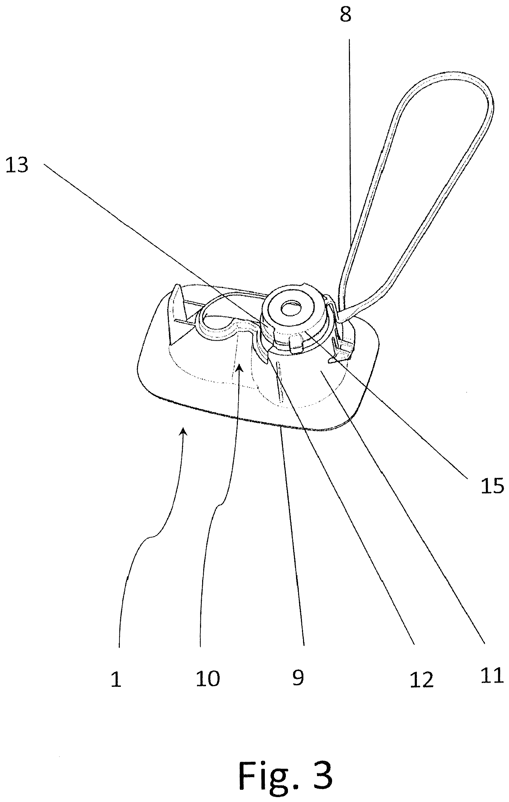

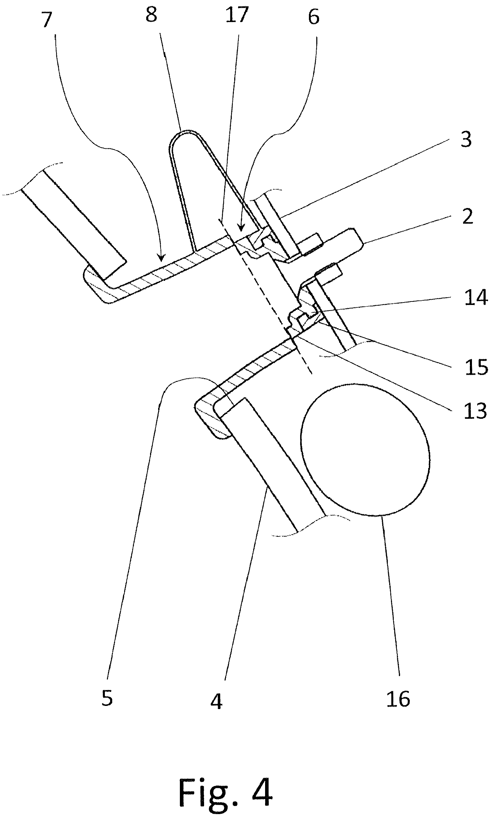

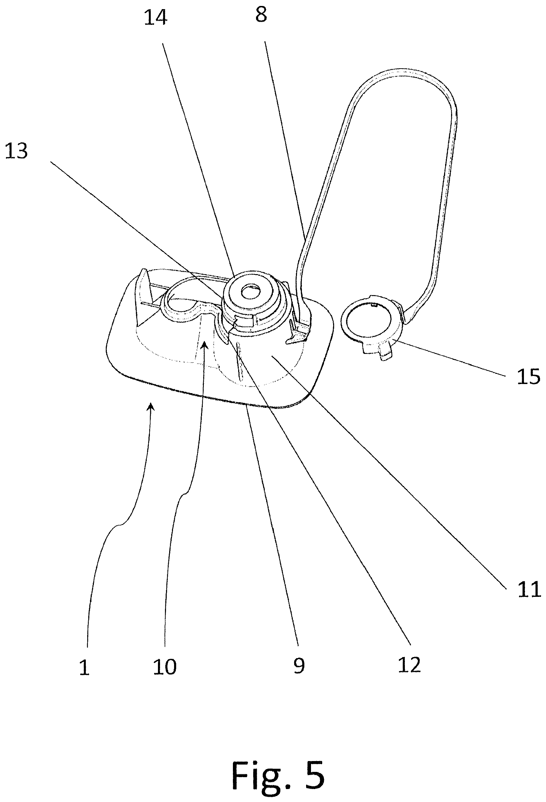

Wie den Fig. 1 und 2 zu entnehmen ist, besteht eine Vorrichtung für das Festhalten eines Bauteils aus einer Abdeckung 1, die mittels einer Schraube 2 an eine Fahrzeugkarosserie 3 befestigt ist, und aus einem Dachhimmel 4 mit Öffnung 5 für das Einsetzen der Abdeckung 1. Die Abdeckung 1 besteht aus einem fixen Teil 6, einem lösbaren Teil 7 und einem Sicherheitshaltemittel 8. Das Sicherheitshaltemittel 8 ist an einem Ende mit dem fixen Teil 6 und an dem anderen Ende mit dem lösbaren Teil 7 verbunden. Den lösbaren Teil 7 bildet ein Grundkörper 9 in rechteckiger Form, an den eine zylindrisch-konische Wand 10 anschließt, die im Wesentlichen einen Hohlraum für die Einsetzung einer Führungsstange der Netztrennwand (nicht dargestellt) bildet, s. Fig. 2. Ein zylindrischer Abschnitt 11 der zylindrisch-konischen Wand 10 weist eine halbzylindrische Einfassung 12 auf, an der der fixe Teil 6 angeordnet ist. Dieser wird gebildet durch ein zylindrisches Element 13, dessen Außendurchmesser geringfügig größer als der Innendurchmesser der halbzylindrischen Einfassung 12 ist. Die Abdeckung 1 ist als Pressteil aus Kunststoff ausgebildet, wobei in Abhängigkeit vom Herstellverfahren und Formgestaltung die Abdeckung in einer anderen Variante gemäß Fig. 3 - 5 ausgeführt werden kann. Hier weist das zylindrische Element 13 eine Einfassung 14 auf, an der einrastbar ein Ring 15 angeordnet ist, wobei in dieser Variante das Sicherheitshaltemittel 8 an einem Ende mit dem lösbaren Teil 7 und an dem anderen Ende mit dem Ring 15 verbunden ist. Die oben beschriebene Vorrichtung funktioniert wie folgt. Vor dem Einbau der Innenverkleidung wird die Abdeckung 1 zuerst in die Öffnung 5 im Dachhimmel 4 eingesetzt. Bei dem eigentlichen Einbau der Innenverkleidung, deren Bestandteil auch das Dachhimmel 4 ist, werden die einzelnen Bauteile in der üblich bekannten Weise zur Fahrzeugkarosserie 3 fixiert. Zu dieser Fixierung dient auch die Abdeckung 1, die mit einer Schraube 2 als Einheit zur Karosserie 3 befestigt ist. Unter dem Dachhimmel 4 sind Kopfairbags 16 angeordnet.
Im Fall einer Grenzsituation und Aktivierung der Kopfairbags 16 bewirkt ihre Aktivierung die Bewegung des Dachhimmels 4 und gleichzeitig die gegenseitige Trennung des fixen Teils 6 und des lösbaren Teils 7 voneinander. Eine unkontrollierte Bewegung der Abdeckung 1 in den Fahrgastraum hin verhindert das Sicherheitshaltemittel 8, das den fixen Teil 6 und den lösbaren Teil 7 der Abdeckung 1 verbindet. Die Trennung erfolgt entlang einer Bruchlinie 17 zwischen dem fixen Teil 6 und dem lösbaren Teil 7, da ihre Verbindung, die infolge des unterschiedlichen Außendurchmessers des zylindrischen Teils 13 gegenüber dem Innendurchmesser der halbzylindrischen Einfassung 12 zustande kommt, einerseits derart fest ist, dass sie die Integrität der Abdeckung 1 als solchen bewerkstelligt, anderseits eine problemlose Trennung beider Teile 6, 7 der Abdeckung 1 bei Aktivierung der Kopfairbags 16 ermöglicht wird.

### Bezugszeichenliste

- 1.: Abdeckung
- 2.: Schraube
- 3.: Karosserie
- 4.: Dachhimmel
- 5.: Öffnung
- 6.: fixer Teil
- 7.: lösbarer Teil
- 8.: Sicherheitshaltemittel
- 9.: Grundkörper
- 10.: Wand
- 11.: zylindrischer Abschnitt
- 12.: halbzylindrische Einfassung
- 13.: zylindrisches Element
- 14.: Einfassung
- 15.: Ring
- 16.: Airbag
- 17.: Bruchlinie

## Patentansprüche

1. Vorrichtung zum Festhalten eines Bauteils gebildet durch eine an einer Fahrzeugkarosserie (3) befestigte Abdeckung (1), einen Dachhimmel (4) mit Öffnung (5) für die Einsetzung der Abdeckung (1) und eines Sicherheitshaltemittels (8), **dadurch gekennzeichnet, dass** die Abdeckung (1) aus einem fixen Teil (6) und einem lösbaren Teil (7) besteht, wobei das Sicherheitshaltemittel (8) an einem Ende mit dem fixen Teil (6) und an dem anderen Ende mit dem lösbaren Teil (7) verbunden ist.

2. Vorrichtung zum Festhalten eines Bauteils nach Anspruch 1 **dadurch gekennzeichnet, dass** der lösbare Teil (7) durch einen Grundkörper (9) gebildet wird, an dem sich eine zylindrisch-konische Wand (10) befindet, die einen zylindrischen Abschnitt (11) mit halbzylindrischer Einfassung (12) aufweist, und das der fixe Teil (6) durch ein zylindrisches Element (13) gebildet wird, das an der halbzylindrischen Einfassung (12) angeordnet ist.

3. Vorrichtung zum Festhalten eines Bauteils nach Ansprüchen 1 und 2 **dadurch gekennzeichnet, dass** der Übergang zwischen der halbzylindrischen Einfassung (12) und dem zylindrischen Element (13) eine Bruchlinie (17) bildet, entlang der die Trennung des fixen Teils (6) vom lösbaren Teil (7) nach der Aktivierung eines Airbags (16) erfolgt.

4. Vorrichtung zum Festhalten eines Bauteils nach vorgenannten Ansprüchen **dadurch gekennzeichnet, dass** der Außendurchmesser des zylindrischen Elements (13) größer als der Innendurchmesser der halbzylindrischen Einfassung (12) ist.
